# EUROPÄISCHE PATENTANMELDUNG

(11) **EP 0 975 083 A2**
(43) Veröffentlichungstag der Anmeldung: **26.01.2000**
(21) Anmeldenummer: 99112019.7
(22) Anmeldetag: 22.06.1999
(51) Int. Cl.: H02K 7/116

(54) **Schneckengetriebe mit Elektromotor**

(30) Priorität: 15.07.1998 DE 19831739
(71) Anmelder: Mannesmann VDO Aktiengesellschaft, 60388 Frankfurt am Main (DE)
(72) Erfinder: Bachnak, Nouhad, 60326 Frankfurt (DE); Ganser, Otmar, 61476 Kronberg (DE)
(74) Vertreter: Klein, Thomas, Dipl.-Ing.

(57) **Zusammenfassung**

Ein Schneckengetriebe (1) besitzt einen Elektromotor (2), der eine Schnecke (4) antreibt, die mit einem Schneckenrad (5) in Eingriff steht. Bisher sind sowohl die Motorwelle (3) als auch die Abtriebswelle (6) in einem Gehäuse gelagert, das aus Montagegründen nur einen Schiebesitz zwischen der Motorwelle (3) und ihren Lagern zuläßt. Um die Montage zu vereinfachen und den wünschenswerten Preßsitz zwischen den Lagern und der Motorwelle (3) zu ermöglichen, ist vorgesehen, daß beide Lagerstellen (20, 21) der Motorwelle (3) in einem ersten Gehäuseteil (8) angeordnet sind, das von einem zweiten Gehäuseteil (9), in welchem die beiden Lagerstellen der Abtriebswelle (6) vorgesehen sind, bei montierten Wellen (3, 6) trennbar und wieder verbindbar ist.

## Beschreibung

Die Erfindung befaßt sich mit einem Schneckengetriebe mit einem Elektromotor, auf dessen Motorwelle eine Schnecke sitzt, einer Abtriebswelle, auf der ein mit der Schnecke in Eingriff stehendes Schneckenrad sitzt, und einem Gehäuse, in welchem die Motorwelle und die Abtriebswelle gelagert sind.

Derartige Schneckengetriebe, wie sie zum Beispiel bei elektrischen Lenkhilfen Verwendung finden, sind beispielsweise aus der DE 198 11 784 bekannt. Die Montage solcher Schneckengetriebe erfolgt in der Weise, daß zunächst das Schneckenrad an der in die Lenksäule integrierten Abtriebswelle befestigt und anschließend die Schnecke in das vorher im Getriebegehäuse montierte Motorwellenlager eingefügt wird. Hierzu ist es erforderlich, daß die Motorwelle im Schiebesitz in dem Lagerinnenring gepaßt ist. Dies stellt eine ungünstige Einbausituation dar, da der Innenring und die Lastrichtung relativ zueinander drehen (Umfangslast). Bei einer Umdrehung der Welle wird folglich jeder Punkt des Innenrings belastet. Grundsätzlich ist es wünschenswert, bei vorliegender Umfangslast den relativ zur Last umlaufenden Lagerring über einen Preßverband einzubauen, um Relativbewegungen zwischen dem Lagerring und der Welle zu vermeiden, die zu einem Verschleiß der Paßfläche führen können.

Die bisher üblichen Getriebegehäuse von Schneckengetrieben erlauben jedoch nur die zuvor beschriebene Montagereihenfolge, so daß ein Preßsitz der Motorwelle im Lagerinnenring des äußeren Motorwellenlagers nicht zu realisieren ist.

Ein weiteres Problem bei den bisher bekannten Schneckengetrieben besteht darin, daß der Elektromotor vollständig in die gesamte Einheit integriert ist und daher nicht separat überprüft werden kann. Eine Überprüfung des Elektromotors ist nur im Rahmen des gesamten Systems nach der vollständigen Demontage der Lenkhilfe möglich und muß von dem Lenksäulen/Getriebehersteller durchgeführt werden, obwohl der Elektromotor von einem anderen Hersteller geliefert wird. Für die Produktionsabläufe kommt erschwerend hinzu, daß die Schnittstelle Elektromotor/Getriebe bei den bisher bekannten Varianten nicht klar definiert ist.

Die Aufgabe der Erfindung besteht darin, ein Schneckengetriebe mit einem Elektromotor zu schaffen, bei welchem der Elektromotor als separate Einheit überprüft werden kann und bei welchem die Motorwelle über eine Preßverbindung mit den Innenringen der Lager verbindbar ist.

Erfindungsgemäß wird die Aufgabe durch ein Schneckengetriebe der eingangs beschriebenen Art gelöst, bei welchem beide Lagerstellen der Motorwelle in einem ersten Teil des Gehäuses angeordnet sind, das von einem zweiten Teil des Gehäuses, in welchem die beiden Lagerstellen der Abtriebswelle vorgesehen sind, bei montierten Wellen trennbar und wieder verbindbar ist.

Das auftrennbare Gehäuse erlaubt es, den Elektromotor mitsamt seines Gehäuseteils bei montiertem Schneckengetriebe abzunehmen, so daß beispielsweise beim Einsatz als elektrische Lenkhilfe das zweite Teil des Gehäuses mit der in die Lenksäule integrierten Abtriebswelle montiert bleiben kann. Auch die Herstellungsabläufe werden vereinfacht, da das erste Teil des Gehäuses bei demjenigen Systempartner vormontiert werden kann, der für die elektrische Ausrüstung beispielsweise eines Fahrzeuges zuständig ist, während das zweite Teil des Gehäuses bei dem für die mechanischen Komponenten zuständigen Systempartner vormontiert werden kann. Die Schnittstelle Elektromotor/Getriebe läßt sich hierbei sehr klar festlegen.

Bei dem erfindungsgemäßen Schneckengetriebe ist es ohne weiteres möglich, den Elektromotor zu Wartungszwecken abzunehmen und separat zu überprüfen.

Durch das geteilte Gehäuse und den Wegfall der bisher starr vorgegebenen Montagereihenfolge ist es nunmehr auch möglich, die Innenringe der Lager der Motorwelle auf dieser im Preßverband anzuordnen, was bei einer auftretenden Umfangslast wünschenswert ist.

Die Teilungsebene der beiden Gehäuseteile kann bei einer ersten Variante zwischen der Schnecke und dem Elektromotor liegen, wobei die Längsachse der Teilungsebene die Motorwelle schneidet. Bei dieser Variante eines geteilten Getriebegehäuses wird das Gehäuseteil mit dem Elektromotor in axialer Richtung bezüglich der Motorwelle in das zweite Teil des Gehäuses eingeschoben und mit diesem verschraubt.

Eine weitere Variante sieht vor, daß die Teilungsebene der beiden Gehäuseteile zwischen den Längsachsen der Motorwelle und der Abtriebswelle liegt.

Im Vergleich zu der vorher beschriebenen Variante erlaubt die Teilungsebene zwischen den Längsachsen der Wellen eine variable Anordnung der Lagerstellen der Motorwellen. Diese können an beiden Enden der Motorwelle vorgesehen sein oder eine Lagerstelle der Motorwelle kann zwischen der Schnecke und dem Elektromotor und die andere Lagerstelle an einem Ende der Motorwelle vorgesehen sein. Bei der ersten Variante mit die Motorwelle schneidender Teilungsebene hingegen können die Lager nur zwischen Schnecke und Elektromotor und an dem motorseitigen Ende der Motorwelle angeordnet sein.

Eine dritte Variante ist so gestaltet, daß die Teilungsebene die Lenksäule in Axialrichtung schneidet, das heißt, daß die Teilungsebene in die Längsachse der Lenksäule plaziert ist.

Diese verschiedenen Varianten finden Anwendung in Abhängigkeit des zur Verfügung stehenden Bauraumes, der angewendeten Produktionstechniken (insbesondere beim Gießen der einzelnen Gehäuseteile) und der Montage.

Vorzugsweise ist die Lagerstelle am motorseitigen Ende der Motorwelle in einem von dem ersten Teil des Gehäuses abnehmbaren Motorgehäusedeckel angeordnet.

In bevorzugter Weiterbildung der Variante mit zwischen den beiden Längsachsen der Wellen liegenden Teilungsebene ist vorgesehen, daß an der Abtriebswelle ein Drehmomentsensor vorgesehen ist, dessen Meßsignal von einer in dem ersten Teil des Gehäuses angeordneten Übertragerspule erfaßbar ist, die mit einer ebenfalls in dem ersten Teil des Gehäuses angeordneten Steuerelektronik zur Steuerung des Elektromotors gekoppelt ist. Die Integration von Übertragerspule und Steuerelektronik in das erste Gehäuseteil stellt eine weitere Vereinfachung des Produktionsablaufes dar, insbesondere weil der Hersteller der Motorkomponenten zumeist auch der Hersteller der sonstigen elektrischen Komponenten ist und die komplette Vormontage daher bei diesem Systemlieferanten erfolgen kann. Lediglich die meist auf dem DMS-Prinzip (Dehnungsmeßstreifen) basierenden Drehmomentsensoren sind an der Abtriebswelle vorzusehen.

Die an sich bereits bekannten Vorrichtungen zum Auffangen von Überlastmomenten können auch bei dem erfindungsgemäßen Schneckengetriebe ohne weiteres Verwendung finden. Beispielsweise kann das Schneckenrad über eine Überlastkupplung an die Abtriebswelle oder die Motorwelle gegen eine Rückstellkraft axial verschiebbar gelagert sein.

Das erfindungsgemäße Schneckengetriebe findet bevorzugt Anwendung bei elektrischen Lenkhilfen von Fahrzeugen (Servolenkung), ist jedoch nicht auf dieses Anwendungsgebiet beschränkt.

Nachfolgend wird anhand der beigefügten Zeichnungen näher auf Ausführungsbeispiele der Erfindung eingegangen. Es zeigen:
- Figur 1:: eine schematische Schrägansicht eines Schneckengetriebegehäuses mit demontiertem Elektromotor,
- Figur 2:: eine Schrägansicht eines ersten Gehäuseteils des Schneckengetriebegehäuses nach Figur 1,
- Figur 3:: eine Schrägansicht des zweiten Gehäuseteils des Schneckengetriebes nach Figur 1,
- Figur 4:: einen Querschnitt des Schneckengetriebegehäuses nach Figur 1,
- Figur 5:: einen Querschnitt eines Schneckengetriebegehäuses mit veränderter Motorwellenlagerung,
- Figur 6:: einen Querschnitt eines Schneckengetriebegehäuses mit einer weiteren Variante einer Motorwellenlagerung,
- Figur 7:: einen Querschnitt des Schneckengetriebegehäuses durch die Abtriebswelle,
- Figur 8:: einen Querschnitt eines Schneckengetriebegehäuses mit einer weiteren Variante einer Teilungsebene,
- Figur 9:: einen Querschnitt des Schneckengetriebegehäuses durch die Abtriebswelle nach Figur 8,
- Figur 10:: eine dreidimensionale Ansicht nach den Figuren 8 und 9.

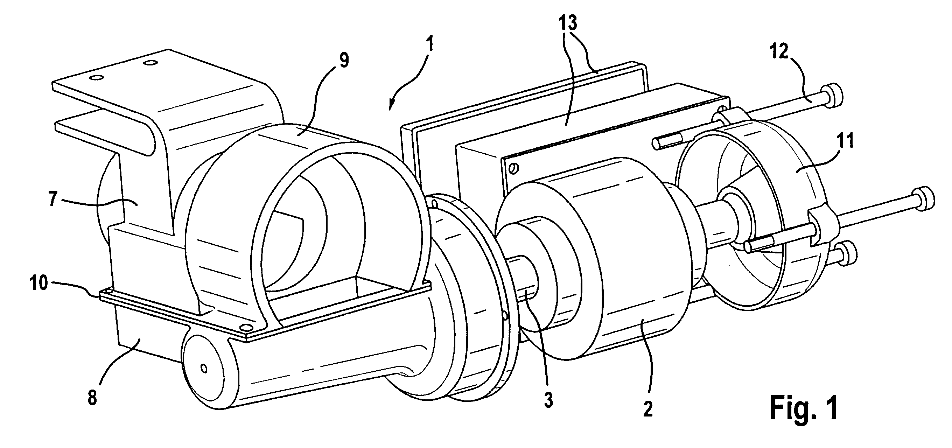

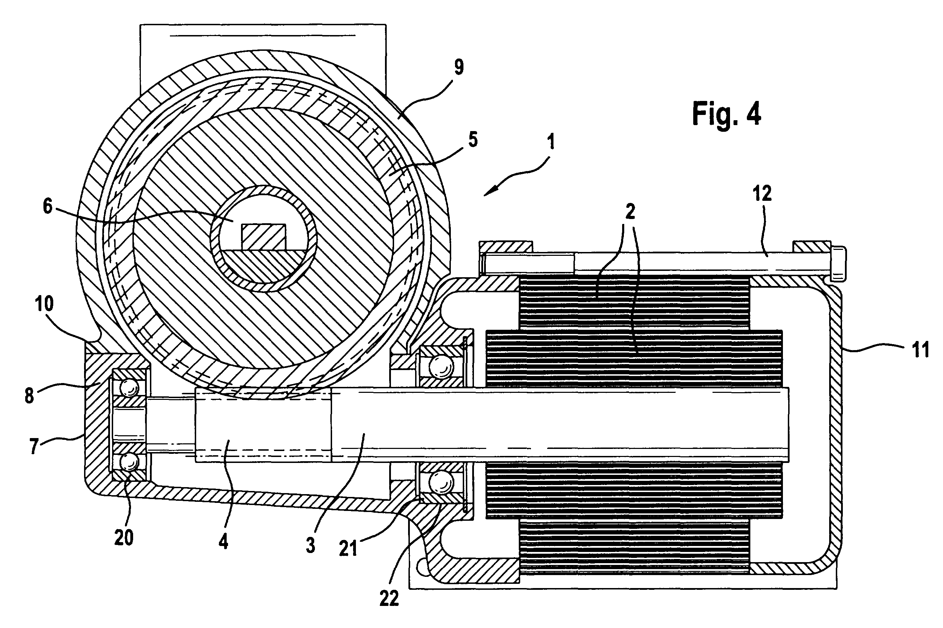

In Figur 1 ist ein Schneckengetriebe 1 in demontiertem Zustand dargestellt. Ein Elektromotor 2, auf dessen Motorwelle 3 eine Schnecke 4 (siehe Figuren 4 bis 7) sitzt, ist in demontierter Lage dargestellt. Die Schnecke 4 kann einstückig aus dem Körper der Motorwelle 3 herausgearbeitet sein.

Ein Schneckenrad 5 sitzt auf einer Abtriebswelle 6 (siehe Figuren 4 bis 7) und steht mit der Schnecke 4 in Eingriff.

Das Schneckengetriebe 1 besitzt ein Getriebegehäuse 7, das aus einem ersten Gehäuseteil 8, das den Elektromotor 2 und die Motorwelle 3 aufnimmt, und einem zweiten Gehäuseteil 9 besteht, in welchem die Abtriebswelle 6 mit dem Schneckenrad 5 gelagert ist. Eine Teilungsebene 10 trennt das erste Gehäuseteil 8 von dem zweiten Gehäuseteil 9 parallel zwischen der Abtriebswelle 6 und der Motorwelle 3. Die beiden Gehäusehälften 8, 9 werden mit Hilfe von Schrauben (nicht gezeigt) gegeneinander verschraubt.

Die Befestigung des Elektromotors 2 an dem ersten Gehäuseteil 8 erfolgt mit Hilfe eines diesem zugehörigen Motorgehäusedeckels 11, der mit Hilfe von drei Gewindebolzen 12 gegen das erste Gehäuseteil 8 verschraubt ist.

Ein separates Gehäuseteil 13 nimmt bei der in Figur 1 dargestellten Ausführungsform die Steuerelektronik zur Ansteuerung des Elektromotors 2 auf.

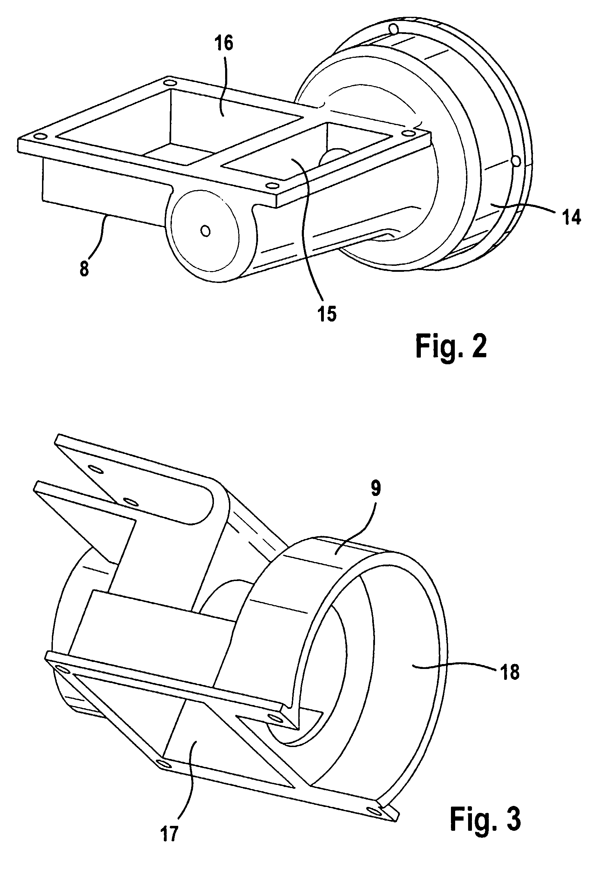

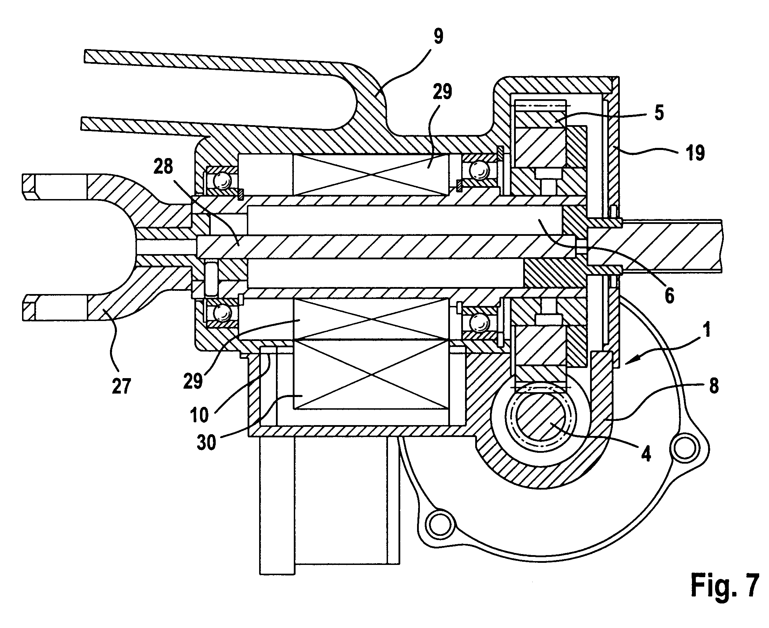

In den Figuren 2 und 3 sind die beiden Gehäuseteile 8, 9 einzeln getrennt voneinander dargestellt. Das erste Gehäuseteil läßt sich im wesentlichen in drei Bereiche gliedern, nämlich einen Flansch 14, an welchem der Elektromotor 2 befestigt wird, einen Getrieberaum 15, in welchem die Schnecke 4 mit dem Schneckenrad 5 in Eingriff steht, und eine weitere Kammer 17, die einen Übertrager (nicht gezeigt) sowie gegebenenfalls die bei der Ausführungsform in Figur 1 in dem Gehäuse 13 untergebrachte Steuerelektronik aufnehmen kann (siehe auch Figur 7). Die Übertragerspule wirkt mit einem auf der Abtriebswelle 6 sitzenden Drehmomentsensor nach dem DMS-Prinzip zusammen, der in einer Kammer 16 in dem zweiten Gehäuseteil 9 angeordnet ist. Ausgestaltungen von Sensoren, die nach dem DMS-Prinzip arbeiten, sind aus der DE 197 47 001.7 oder auch aus der DE 198 14 261.7 der gleichen Anmelderin bekannt; insofern wird auf die dort beschriebenen Ausgestaltungen Bezug genommen, wobei dies jedoch nicht die einzigen Ausgestaltungen sind, sondern andere Ausgestaltungen sowie andere Meßprinzipien auch Anwendung finden können.

Das zweite Gehäuseteil 9 weist außerdem einen nach außen zunächst offenen Raum 18 für die Aufnahme des Schneckenrades 5 auf, der durch einen Deckel 19 (siehe Figur 7) nach der Montage der Abtriebswelle 6 verschließbar ist.

In den Figuren 4 bis 6 sind drei verschiedene Varianten der Lagerung der Motorwelle dargestellt. Bei der in Figur 4 dargestellten Anordnung befindet sich die Schnecke 4 zwischen den beiden Wälzlagern 20, 21, deren Innenringe jeweils im Preßsitz auf dem Außenumfang der Motorwelle 3 sitzen. Der Preßverband zwischen den Lagern 20, 21 und der Motorwelle 3 ist möglich, weil das am Ende der Motorwelle 3 vorgesehene Lager 20 wesentlich kleiner dimensioniert werden kann, als das zwischen der Schnecke 4 und dem Elektromotor 2 angeordnete Lager 21, so daß das Lager 20 vormontiert mitsamt der Welle problemlos durch einen Ausschnitt in dem ersten Gehäuseteil 8 paßt, an dessen Kante das zweite Lager 21, das in einem größeren Innendurchmesser 22 sitzt, axial abgestützt ist.

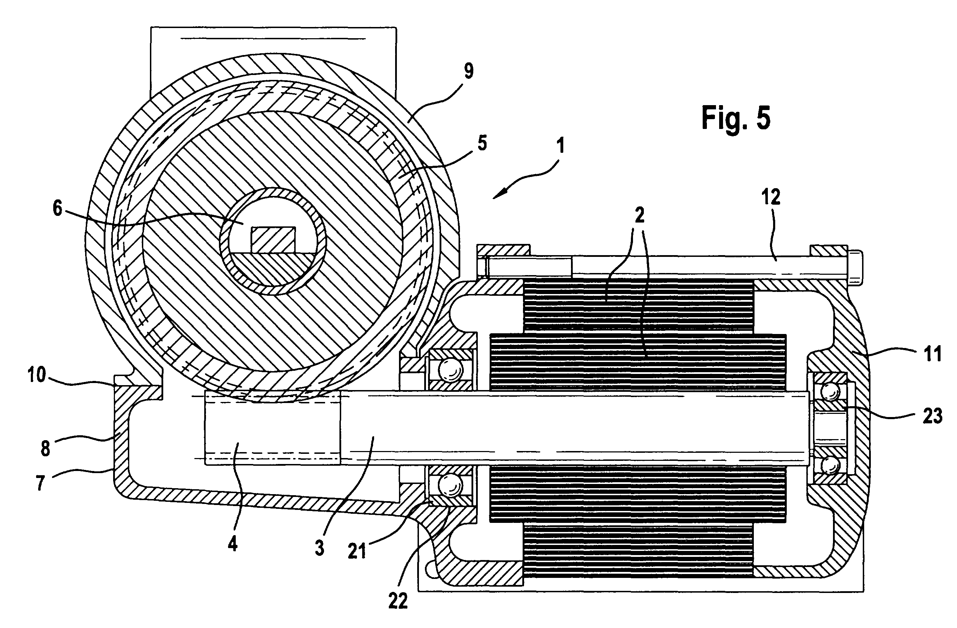

Bei der in Figur 5 abgebildeten Variante ist die Motorwelle 3 nicht am freien Ende der Schnecke 4, sondern am motorseitigen Ende mit einem Lager 23 in dem Motorgehäusedeckel 11 neben dem Lager 21 gelagert. Bei dieser Variante ist es ohne weiteres möglich, die Teilungsebene zwischen dem ersten Gehäuseteil 8 und dem zweiten Gehäuseteil 9 beispielsweise senkrecht zur Motorwelle 3 zu legen, so daß die Demontage des Elektromotors mit seinem Gehäuseteil 8 durch Herausziehen der Einheit aus der Öffnung in dem zweiten Gehäuseteil 9 erfolgt.

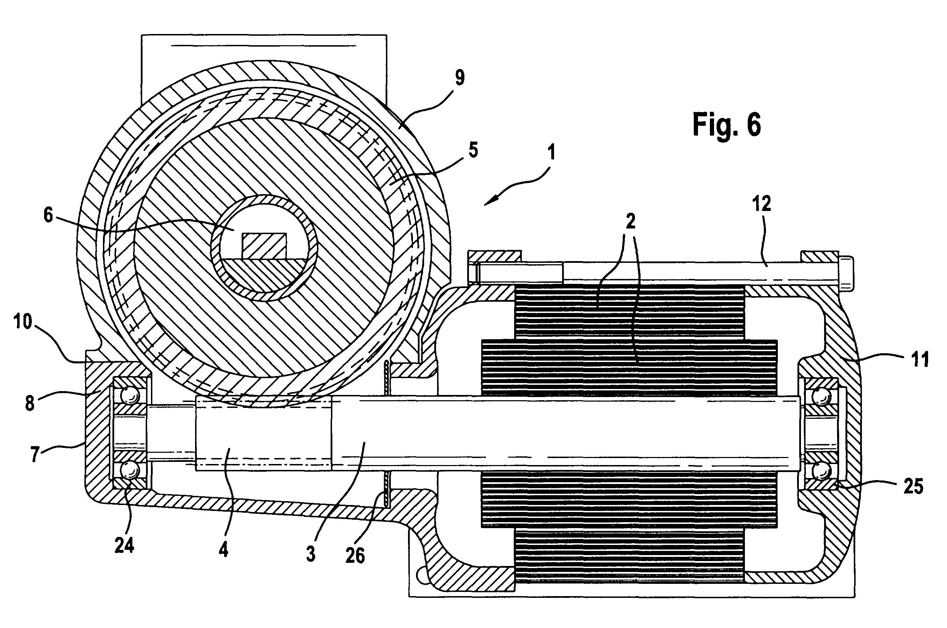

Eine dritte Variante der Anordnung von Lagerstellen ist in Figur 6 dargestellt, wobei diese Ausführungsform der in Figur 1 dargestellten Variante entspricht. Hierbei erfolgt die Lagerung der Motorwelle mit Hilfe eines ersten Lagers 24 am schneckenseitigen Ende der Motorwelle und einem zweiten Lager 25 im Motorgehäusedeckel 11 am motorseitigen Ende der Motorwelle 3. Zwischen dem Getrieberaum 15 und dem Elektromotor 2 ist eine Trennwand 26 vorgesehen, durch welche die Motorwelle 3 ragt. Anstelle der Trennwand 26 kann mit der Motorwelle 3 eine sogenannte Schleuderscheibe verbunden werden, durch welche der Elektromotor 2 von Verschmutzungen ferngehalten wird. Dies betrifft insbesondere das Fernhalten von Schmiermitteln im Getriebebereich, so daß diese Schmiermittel durch die Zentrifugalkräfte der Schleuderscheibe im Getriebebereich gehalten werden.

Aus Figur 7 wird die Einbausituation des Schneckengetriebes 1 bei der Verwendung als elektrische Lenkhilfe in Kraftfahrzeugen deutlich. Die Abtriebswelle 5 des Schneckengetriebes 1 bildet dabei einen Teil einer Lenksäule 27. In der Lenksäule 27 ist in einer Ausnehmung (Bohrung) innen ein Sensorstab 28 angeordnet, das heißt, daß die Lenksäule 27 in einem Teilbereich konzentrisch um den Sensorstab 28 angeordnet ist, der eine Torsion der Lenksäule 27 erfaßt. Diese Torsion wird von einer ebenfalls konzentrisch um die Lenksäule 27 angeordneten Übertragerspule 29 erfaßt, so daß in dieser eine elektrische Spannung induziert wird. Zum berührungslosen Abgreifen dieser Spannung ist eine weitere Übertragerspule 30 vorgesehen, die als Halbschale um die Übertragerspule 29 herum angeordnet ist, wobei deren Ausgangssignal einer in Figur 7 noch nicht gezeigten Steuerelektronik zugeführt wird.

Um den Schneckentrieb vor kurzfristigen Überlastungen durch auf die Lenksäule 27 einwirkende Stöße zu schützen, kann das Schneckenrad 5 über eine Rutschkupplung an die Abtriebswelle 5 gekoppelt sein, wie dies in der DE 198 11 784 beschrieben ist. Auch eine axial gegen eine Rückstellkraft verschiebbare Lagerung der Motorwelle 3 ist geeignet, kurzfristige Stoßbelastungen aufzufangen.

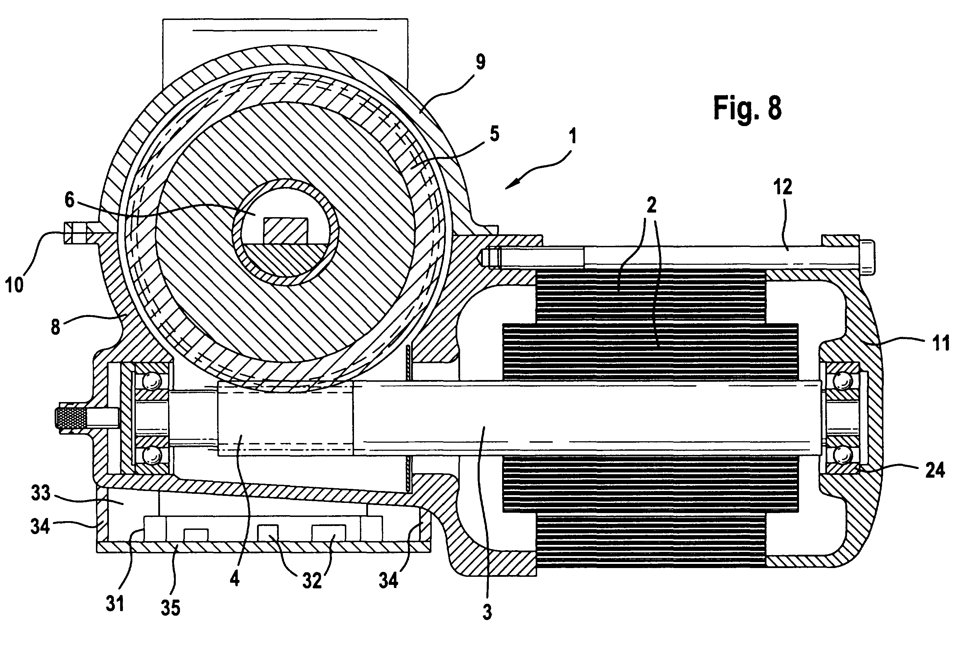

Figur 8 zeigt einen Querschnitt eines Schneckengetriebegehäuses mit einer weiteren Variante einer Anordnung der Teilungsebene. Hier ist erkennbar, daß die Teilungsebene 10 die Abtriebswelle 6 in Axialrichtung schneidet, wobei sowohl an dem ersten Gehäuseteil 8 als auch an dem zweiten Gehäuseteil 9 ein einander zugeordneter Vorsprung vorgesehen ist, durch welchen beide Gehäuseteile auf der einen Seite miteinander verbunden werden. Der zweite Gehäuseteil 9 weist auf seiner anderen Seite ebenfalls diesen Vorsprung auf, mit dem er an dem massiv ausgestalteten Bereich des ersten Gehäuseteiles 8 (in etwa an der einen Endseite des Elektromotors 2) befestigt wird.

Weiterhin ist in Figur 8 noch gezeigt, daß das Getriebegehäuse - hier der erste Gehäuseteil 8 - eine Steuerelektronik 31 mit mehreren Bauteilen 32 aufnimmt. Der Steuerelektronik 31 wird als Eingangssignal zumindest das Ausgangssignal der Übertragerspule 30 zugeführt, wobei in Abhängigkeit zumindest dieses Ausgangssignales und gegebenenfalls weiterer Signale der Elektromotor 2 angesteuert wird. Zu diesem Zweck ist die Steuerelektronik 31 elektrisch mit dem Elektromotor 2 verschaltet, wobei die räumliche Nähe von Steuerelektronik 31 und Elektromotor 2 im Hinblick auf eine kurze Verbindung (insbesondere Verkabelung) von Vorteil ist.

Die Steuerelektronik 31 ist feuchtigkeits- und staubgeschützt in einer Kammer 33 untergebracht, die von mehreren Seitenwänden 34 und einem Deckel 35 gebildet ist. Die Seitenwände 34 und der erste Gehäuseteil 8 können eine Baueinheit (einstückig) bilden, während es auch denkbar ist, die Seitenwände 34 später, also nach Herstellung des ersten Gehäuseteiles 8, anzubringen. Der Deckel 35 wird unter Zwischenlegung einer nicht gezeigten, umlaufenden Dichtung an den Seitenwänden 34 befestigt. Damit ist die Kammer 33 zum Einbau und auch zum nachträglichen Prüfen oder Austauschen der Steuerelektronik 31 zugänglich. Alternativ ist noch denkbar, daß die Seitenwände 34 und der Deckel 35 eine Baueinheit bilden, die an dem ersten Gehäuseteil 8 unter Zwischenlegung einer nicht gezeigten, umlaufenden Dichtung befestigt wird.

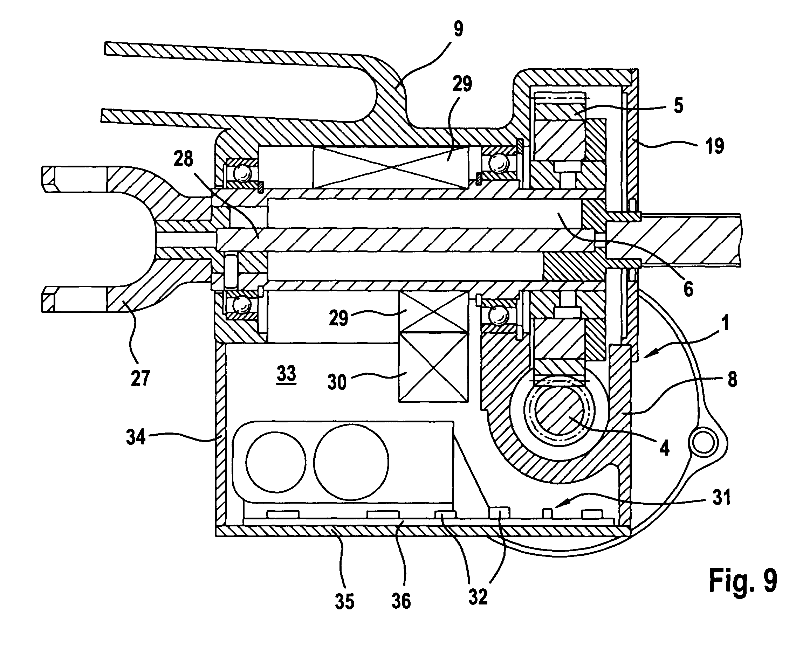

Figur 9 zeigt einen Querschnitt des Schneckengetriebegehäuses durch die Abtriebswelle nach Figur 8, wobei noch anzumerken ist, daß die Seitenwände 34 mit dem Deckel 35 an dem schon geschlossenen Schneckengetriebgehäuse befestigt werden können, aber auch zum verschmutzungsgeschützten Verschließen eines zumindest teilweise offenen Schneckengetriebgehäuses dienen können. Somit sind die Seitenwände 34 mit dem Deckel 35 eigenständige Bauteile oder können Gehäusebestandteil des Schneckengetriebgehäuses sein. Ebenfalls ist eine gegenüber der Figur 7 modifizierte Ausgestaltung der Übertragerspulen 29 und 30 gezeigt, wobei auch hier die kurze Verbindung zwischen der Übertragerspule 30 und der Steuerelektronik 31 erkennbar ist. Zu der Steuerelektronik 31 ist mit der Bezugsziffer 36 noch eine Leiterplatte bezeichnet, die die Bauteile 32 sowie die Verbindungen zum Beispiel über Steckverbindungen zu der Übertragerspule 30 und den Elektromotor 2 aufnimmt.

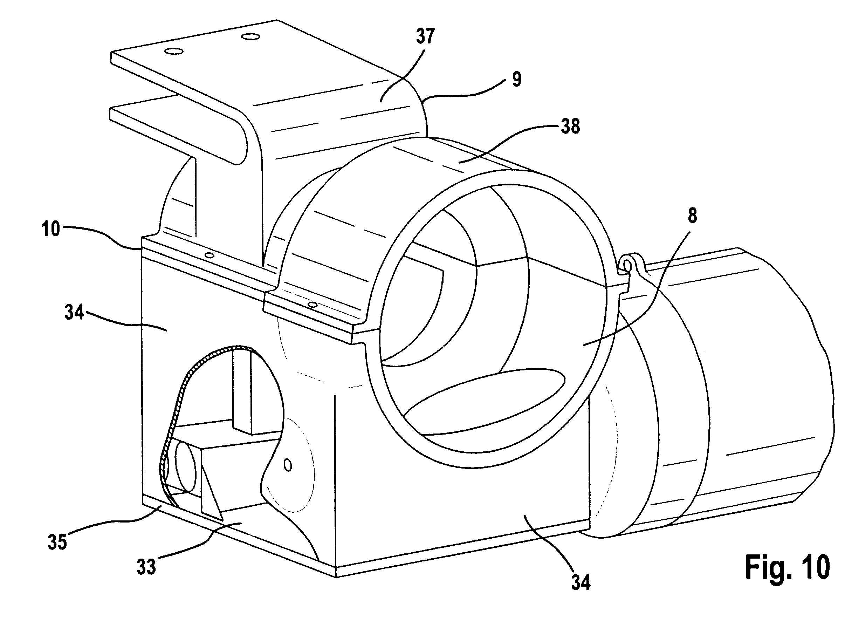

Figur 10 zeigt eine dreidimensionale Ansicht nach den Figuren 8 und 9, wobei erkennbar ist, daß der zweite Gehäuseteil 8 nochmals aus zwei Teilen besteht, die in Figur 10 mit den Bezugsziffern 37 und 38 bezeichnet sind. Der Gehäuseteil 37 ist fester Bestandteil des zweiten Gehäuseteiles 9, während der Gehäuseteil 38 abnehmbar ist. Durch Abnahme des Gehäuseteiles 38 ist das Schneckengetriebe 1 beispielsweise zu Wartungszwecken (Schmierung) zugänglich. Die Leiterplatte 36 der Steuerelektronik 31 kann in geeigneter Weise an zumindest einem Gehäuseteil, an einer Seitenwand oder dem Deckel befestigt werden.

### Bezugszeichenliste:

- 1.: Schneckengetriebe
- 2.: Elektromotor
- 3.: Motorwelle
- 4.: Schnecke
- 5.: Schneckenrad
- 6.: Abtriebswelle
- 7.: Getriebegehäuse
- 8.: Erster Gehäuseteil
- 9.: Zweiter Gehäuseteil
- 10.: Teilungsebene
- 11.: Motorgehäusedeckel
- 12.: Gewindebolzen
- 13.: Separates Gehäuseteil
- 14.: Flansch
- 15.: Getrieberaum
- 16.: Kammer
- 17.: Weitere Kammer
- 18.: Offener Raum
- 19.: Deckel
- 20.: Wälzlager
- 21.: Wälzlager
- 22.: Innendurchmesser
- 23.: Lager
- 24.: Erstes Lager
- 25.: Zweites Lager
- 26.: Trennwand
- 27.: Lenksäule
- 28.: Sensorstab
- 29.: Übertragerspule
- 30.: Übertragerspule
- 31.: Steuerelektronik
- 32.: Bauteile
- 33.: Kammer
- 34.: Seitenwände
- 35.: Deckel
- 36.: Leiterplatte
- 37.: Gehäuseteil
- 38.: Gehäuseteil

## Patentansprüche

1. Schneckengetriebe mit einem Elektromotor (2), auf dessen Motorwelle (3) eine Schnecke (4) sitzt, einer Abtriebswelle (6), auf der ein mit der Schnecke (4) in Eingriff stehendes Schneckenrad (5) sitzt, und einem Gehäuse (7), in welchem die Motorwelle (3) und die Abtriebswelle (6) gelagert sind, dadurch gekennzeichnet, daß beide Lagerstellen (20, 21; 21, 23; 24, 25) der Motorwelle (3) in einem ersten Teil (8) des Gehäuses (7) angeordnet sind, das von einem zweiten Teil des Gehäuses (9), in welchem die beiden Lagerstellen der Abtriebswelle (6) vorgesehen sind, bei montierten Wellen (3, 6) trennbar und wieder verbindbar ist.

2. Schneckengetriebe nach Anspruch 1, dadurch gekennzeichnet, daß eine Teilungsebene der beiden Gehäuseteile (8, 9) zwischen der Schnecke (4) und dem Elektromotor (2) liegt und die Längsachse der Motorwelle (3) schneidet.

3. Schneckengetriebe nach Anspruch 1, dadurch gekennzeichnet, daß eine Teilungsebene (10) der beiden Gehäuseteile (8, 9) zwischen den Längsachsen der Motorwelle (3) und der Abtriebswelle (6) liegt.

4. Schneckengetriebe nach Anspruch 1, dadurch gekennzeichnet, daß eine Teilungsebene (10) die Abtriebswelle (6) in Axialrichtung schneidet.

5. Schneckengetriebe nach Anspruch 3, dadurch gekennzeichnet, daß die Lagerstellen (24, 25) der Motorwelle (3) an deren beiden Enden vorgesehen sind.

6. Schneckengetriebe nach Anspruch 3, dadurch gekennzeichnet, daß eine Lagerstelle (21) der Motorwelle (3) zwischen der Schnecke (4) und dem Elektromotor (2) und die andere Lagerstelle (20; 23) an einem Ende der Motorwelle (3) vorgesehen ist.

7. Schneckengetriebe nach einem der vorhergehenden Ansprüche, dadurch gekennzeichnet, daß die Lagerstelle (23; 25) am motorseitigen Ende der Motorwelle (3) in einem von dem ersten Teil (8) des Gehäuses abnehmbaren Motorgehäusedeckel (11) angeordnet ist.

8. Schneckengetriebe nach einem der vorhergehenden Ansprüche, dadurch gekennzeichnet, daß an den Lagerstellen (20, 21; 21, 23; 24, 25) Lager mit Innenringen vorgesehen sind, die im Preßsitz auf der Motorwelle (3) angeordnet sind.

9. Schneckengetriebe nach einem der Ansprüche 3 bis 7, dadurch gekennzeichnet, daß an der Abtriebswelle (6) ein Drehmomentsensor vorgesehen ist, dessen Meßsignal von einer in einem Teil, insbesondere in dem ersten Teil (8), des Gehäuses angeordneten Übertragerspule (30) erfaßbar ist, die mit einer, insbesondere ebenfalls in dem ersten Gehäuseteil (8) angeordneten, Steuerelektronik (31) zur Steuerung des Elektromotors (2) gekoppelt ist.

10. Schneckengetriebe nach einem der vorhergehenden Ansprüche, dadurch gekennzeichnet, daß das Schneckenrad (5) über eine Überlastkupplung an die Abtriebswelle (6) gekoppelt ist oder die Motorwelle (3) gegen eine Rückstellkraft axial verschiebbar gelagert ist.

11. Elektrische Lenkhilfe, gekennzeichnet durch ein Schneckengetriebe (1) nach einem der vorhergehenden Ansprüche.
